# EUROPÄISCHE PATENTSCHRIFT

(11) **EP 1 047 585 B1**
(45) Veröffentlichungstag und Bekanntmachung des Hinweises auf die Patenterteilung: **12.06.2002**
(21) Anmeldenummer: 98966765.4
(22) Anmeldetag: 24.11.1998
(51) Int. Cl.: B60T 8/00

(54) **VERFAHREN UND VORRICHTUNG ZUR STABILISIERUNG EINES FAHRZEUGES IM SINNE EINER UMKIPPVERMEIDUNG**
METHOD AND DEVICE FOR STABILISING A MOTOR VEHICLE IN ORDER TO PREVENT IT FROM ROLLING OVER
PROCEDE ET DISPOSITIF DESTINES A STABILISER UN VEHICULE, PLUS PRECISEMENT A L'EMPECHER DE CULBUTER

(30) Priorität: 21.01.1998 DE 19802041
(43) Veröffentlichungstag der Anmeldung: 02.11.2000
(73) Patentinhaber: ROBERT BOSCH GMBH, 70442 Stuttgart (DE)
(72) Erfinder: SCHRAMM, Herbert, D-71229 Leonberg (DE); LEIMBACH, Klaus-Dieter, D-73569 Eschach (DE); HECKER, Falk, D-71706 Markgröningen (DE); JUNDT, Oliver, D-74354 Besigheim-Ottmarsheim (DE)
(86) Internationale Anmeldenummer: DE9803457
(87) Internationale Veröffentlichungsnummer: WO9937516

(56) Entgegenhaltungen:
- EP-A- 0 321 894
- EP-A- 0 330 149
- DE-A- 4 228 893
- DE-A- 19 529 539
- DE-C- 19 602 879
- US-A- 5 446 658
- US-A- 5 471 386

## Beschreibung

### Stand der Technik

Die Erfindung betrifft ein Verfahren und eine Vorrichtung zur Stabilisierung eines Fahrzeuges im Sinne einer Umkippvermeidung. Solche Verfahren und Vorrichtungen sind aus dem Stand der Technik in vielerlei Modifikationen bekannte, zum Beispiel aus dem Dokument EP-A-0 321 894.

Aus der DE 32 22 149 C2 ist eine Vorrichtung für die Vermeidung des Seitwärtskippens eines Fahrzeuges bekannt. Bei diesem Fahrzeug handelt es sich um einen Portalhubwagen. Die Vorrichtung enthält eine Einrichtung zur Berechnung der statischen Stabilität des Fahrzeuges als kritischen Bezugswert aus dem Quotienten von Fahrzeugspur und der zweifachen Höhe des Gesamtschwerpunktes. Ferner enthält die Vorrichtung eine Einrichtung zu Berechnung der dynamischen Instabilität aus dem Quotienten von Fahrzeuggeschwindigkeit im Quadrat und dem Produkt des aus dem jeweiligen Steuerwinkel berechneten Kurvenradius mit der Erdbeschleunigung. Wird der Bezugswert durch die dynamische Instabilität überschritten, so wird die Geschwindigkeit des Fahrzeuges reduziert. Dies geschieht zum einen durch Ansteuerung der Fahrzeugbremsen und zum anderen durch entsprechende Ansteuerung der Motorkupplung.

Aus der DE 44 16 991 A1 ist ein Verfahren und eine Einrichtung zum Warnen des Fahrers eines Lastkraftwagens vor Kippgefahr bei Kurvenfahrten bekannt. Hierzu wird vor dem Einfahren des Fahrzeuges in eine Kurve der Fahrzeugtyp und die für die Kippgefahr relevanten Zustandsdaten erfaßt und in Abhängigkeit vom Fahrzeugschwerpunkt und Kurvenradius das Kipprisiko bzw. die für letzteres maßgebliche Grenzgeschwindigkeit ermittelt. Es wird ein zur Geschwindigkeitsreduzierung aufforderndes Signal ausgelöst, wenn die aktuelle Fahrgeschwindigkeit des Fahrzeuges ein Kipprisiko begründet oder ein vorbestimmter Sicherheitsabstand zur Kippgefahr unterschritten wird. Die Fahrgeschwindigkeit des Fahrzeuges, bei der mit Sicherheit keine Kippgefahr besteht, wird ausgehend von einer Kippgleichung ermittelt. In die Kippgleichung gehen u.a. die Fahrzeuggeschwindigkeit, der vom Fahrzeug durchfahrene Kurvenradius, die Höhe des Schwerpunktes des Fahrzeuges über der Fahrbahn, sowie das Ungleichgewicht der Radlasten ein. Die Radlasten werden mit Hilfe von in die Fahrbahn eingelassenen Radlastsensoren ermittelt. Unterschreitet die Fahrgeschwindigkeit des Fahrzeuges einen vorbestimmten Sicherheitsabstand zu der an der Grenze der Kippgefahr liegenden Fahrgeschwindigkeit, so wird ein Signal erzeugt, mit dem der Fahrer des Fahrzeuges vor überhöhter Geschwindigkeit beim Befahren der Kurve gewarnt wird. Das die überhöhte Fahrgeschwindigkeit anzeigende Signal wird solange ausgelöst, bis die jeweils gemessene Fahrgeschwindigkeit auf ein jegliches Kipprisiko ausschließendes Maß reduziert ist.

Die Aufgabe der vorliegenden Erfindung besteht darin, bestehende Verfahren bzw. Vorrichtungen zur Stabilisierung eines Fahrzeuges im Sinne einer Umkippvermeidung zu verbessern.

Diese Aufgabe wir durch die Merkmale der Ansprüche 1 bzw. 18 gelöst.

### Vorteile der Erfindung

Ein Vorteil des erfindungsgemäßen Verfahrens bzw. der erfindungsgemäßen Vorrichtung gemäß der ersten Ausführungsform gegenüber dem Stand der Technik ist der, daß bei der Ermittlung einer Größe, die beschreibt, ob für das Fahrzeug eine Kipptendenz, insbesondere eine Kipptendenz um eine in Längsrichtung des Fahrzeuges orientierte Fahrzeugachse, vorliegt, eine das Radverhalten wenigstens eines Rades beschreibende Größe berücksichtigt wird. Aus diesem Grund kann schneller auf eine Kipptendenz reagiert werden, da sich das Kippen eines Fahrzeuges als erstes im Radverhalten bemerkbar macht.

Ein Vorteil des erfindungsgemäßen Verfahrens bzw. der erfindungsgemäßen Vorrichtung gemäß der zweiten Ausführungsform gegenüber dem Stand der Technik ist der, daß bei der Ermittlung des charakteristischen Wertes für die die Querdynamik des Fahrzeuges beschreibende Größe die momentanen Reibverhältnisse berücksichtigt werden. Dadurch werden die Straßenverhältnisse, die das Umkippverhalten eines Fahrzeuges beeinflussen, berücksichtigt und somit das Verfahren genauer.

Ein weiterer Vorteil des erfindungsgemäßen Verfahrens bzw. der erfindungsgemäßen Vorrichtung besteht darin, daß es bzw. sie sich für Nutzfahrzeuge, insbesondere Sattelzüge, Gliederzüge, Busse, sowie für Personenkraftwagen mit hohem Schwerpunkt, wie beispielsweise Transporter, Vans oder Geländewagen eignet, d.h., daß es bzw. sie für verschiedene Fahrzeuge verwendbar ist.

Weitere Vorteile sowie vorteilhafte Ausgestaltungen können den Unteransprüchen, der Zeichnung sowie der Beschreibung der Ausführungsbeispiele entnommen werden.

### Zeichnung

Die Zeichnung besteht aus den Figuren 1 bis 4. Die Figuren 1a und 1b zeigen verschiedene Straßenfahrzeuge, bei denen das erfindungsgemäße Verfahren eingesetzt wird. Figur 2 zeigt in einer Übersichtsanordnung die erfindungsgemäße Vorrichtung zur Durchführung des erfindungsgemäßen Verfahrens. Die Figuren 3 und 4 zeigen jeweils mit Hilfe eines Ablaufdiagrammes zwei verschiedene Ausführungsformen zur Durchführung des erfindungsgemäßen Verfahrens. Dabei ist die Darstellung auf die wesentlichen Schritte beschränkt.

Es sei darauf hingewiesen, daß Blöcke mit derselben Bezeichnung in unterschiedlichen Figuren die selbe Funktion haben.

### Ausführungsbeispiel

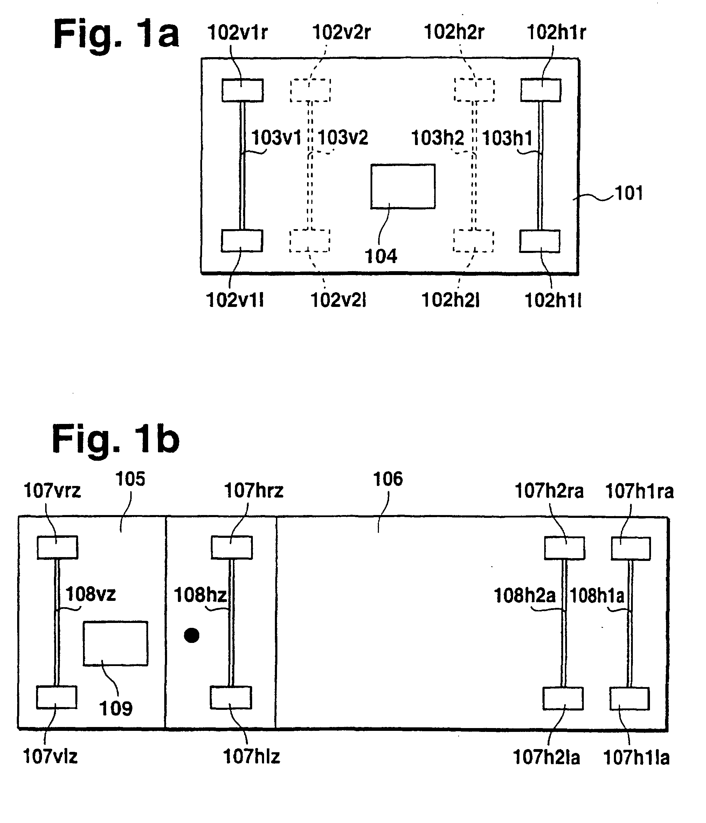

Zunächst soll auf die Figuren 1a und 1b eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Bei dem in Figur 1a dargestellten einteiligen Fahrzeug 101 soll es sich um ein Fahrzeug mit wenigstens zwei Radachsen handeln, was durch die teilweise gestrichelte Darstellung angedeutet ist. Die Radachsen des Fahrzeuges 101 sind mit 103ix bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet ist. Je weiter die jeweilige Radachse von der Fahrzeugberandung entfernt ist, desto größer ist der Wert des zugehörigen Index x. Den Radachsen 103ix sind die Räder 102ixj zugeordnet. Die Bedeutung der Indizes i bzw. x entspricht der vorstehend beschriebenen. Mit dem Index j wird angezeigt, ob sich das Rad auf der rechten (r) bzw. auf der linken (l) Fahrzeugseite befindet. Bei der Darstellung der Räder 102ixj wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind die entsprechenden Räder 107ijz zugeordnet. Die Bedeutung der Indizes i bzw. j entspricht der bereits im Zusammenhang mit Figur 1a beschriebenen. Der Index z gibt an, daß es sich um Radachsen bzw. Räder der Zugmaschine handelt. Ferner weist die Zugmaschine 105 ein Steuergerät 109 auf, in dem das erfindungsgemäße Verfahren abläuft und mit dem sowohl die Zugmaschine 105 als auch der Auflieger 106 stabilisiert wird. Der Auflieger 106 soll zwei Radachsen 108ixa enthalten. Den beiden Radachsen 108ixa sind in entsprechender Weise die Räder 107ixja zugewiesen. Die Bedeutung der Indizes i bzw. x bzw. j entspricht der bereits im Zusammenhang mit Figur 1a dargestellten. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein. Ferner ist es denkbar, sowohl das Zugfahrzeug 105 als auch den Auflieger 106 mit einem Steuergerät auszustatten.

Die in den Figuren 1a und 1b gewählte Kennzeichnung durch die Indizes a, i, j, x sowie z ist für sämtliche Größen bzw. Komponenten, bei denen sie Verwendung findet, entsprechend.

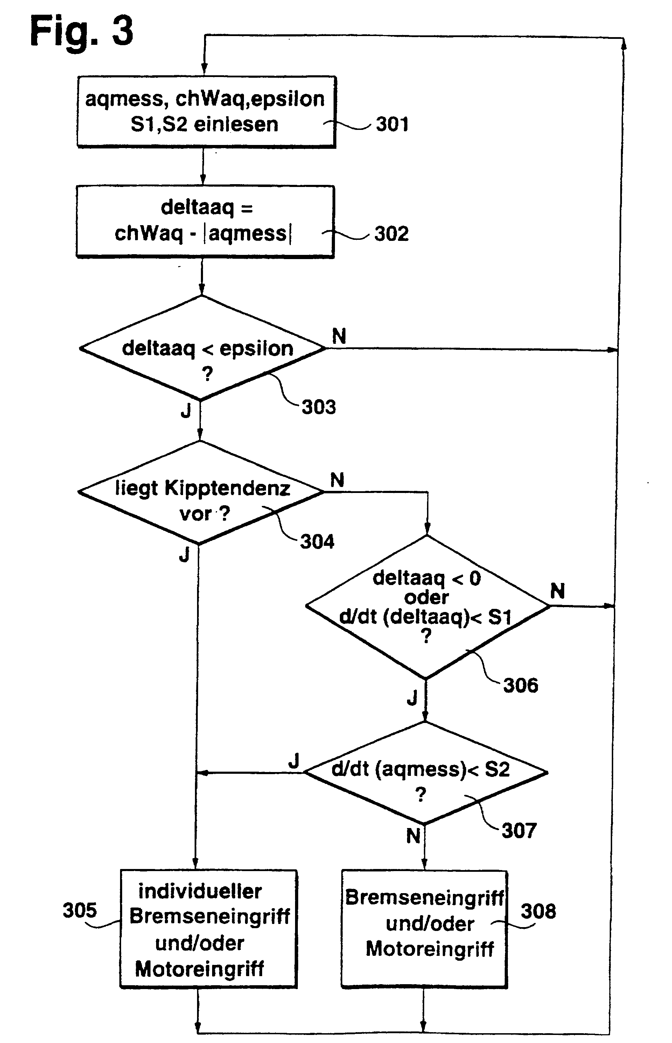

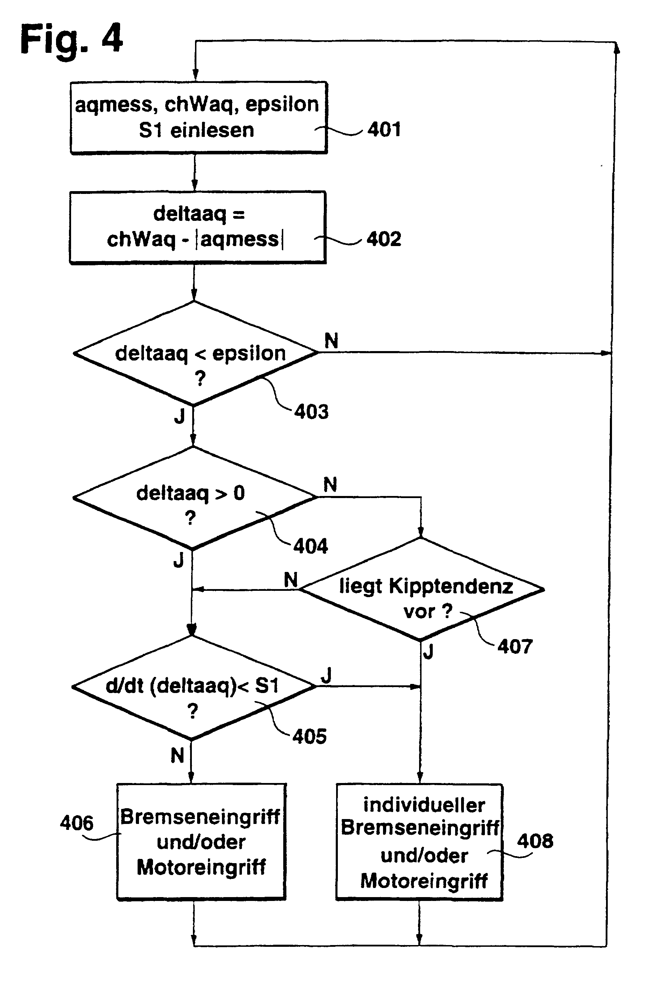

Die erfindungsgemäße Vorrichtung bzw. das erfindungsgemäße Verfahren betrifft die Stabilisierung eines Fahrzeuges im Sinne einer Umkipperkennung. In dieser Anmeldung werden zwei Ausführungsformen vorgestellt, denen jeweils eine unterschiedliche Vorgehensweise bei der Auswahl der zum Einsatz kommenden Stabilisierungsstrategien zugrunde liegt. Auf die beiden Ausführungsformen wird im Zusammenhang mit den Figuren 3 bzw. 4 eingegangen.

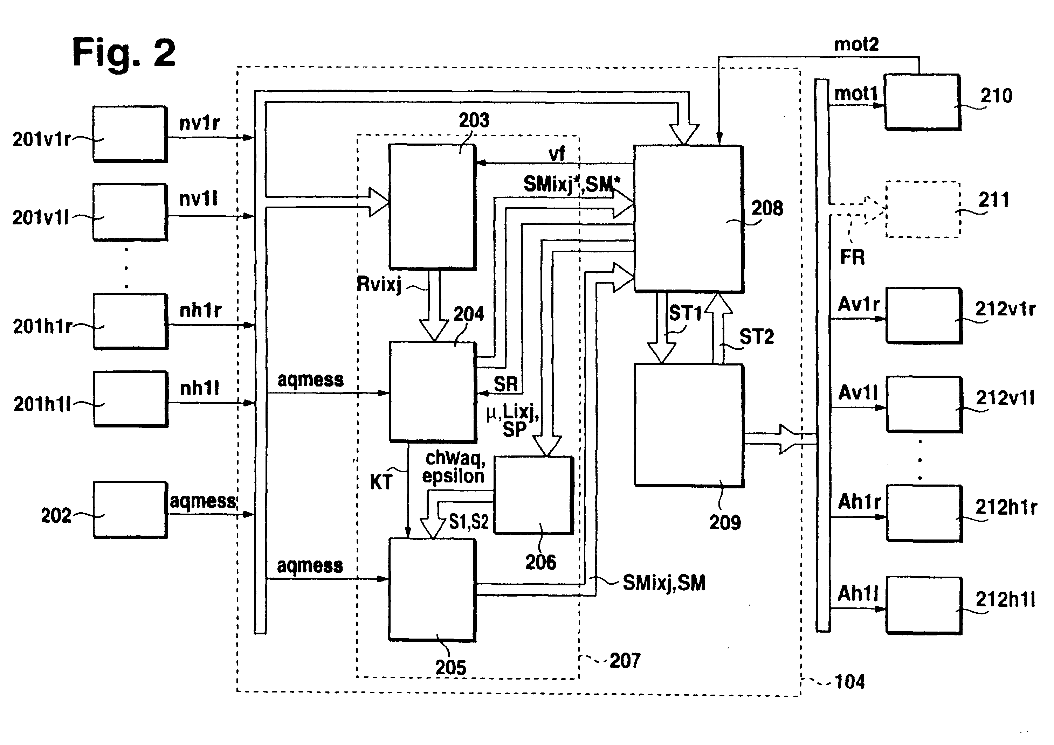

Zunächst soll mit Hilfe von Figur 2 die erfindungsgemäße Vorrichtung, die beiden Ausführungsformen zugrundeliegt, beschrieben werden.

Bei dem der Figur 2 zugrundeliegenden Fahrzeug handelt es sich um ein einteiliges Fahrzeug, wie es beispielsweise in Figur 1a dargestellt ist. Es sei angenommen, daß dieses einteilige Fahrzeug wenigstens zwei Radachsen 103ix aufweist. Bei diesen beiden Radachsen soll es sich um die Vorderachse 103v1 mit den Rädern 102v1r bzw. 102v1l sowie um die Hinterachse 103h1 mit den Rädern 102h1r bzw. 102h1l handeln. Die zu diesen Rädern gehörenden Raddrehzahlsensoren 201v1r, 201v1l, 201h1r bzw. 201h1l sind in Figur 2 dargestellt. Je nach Anzahl der Radachsen des einteiligen Fahrzeuges kommen, wie in Figur 2 angedeutet, weitere Raddrehzahlsensoren 201ixj hinzu. Mit den Raddrehzahlsensoren 201ixj werden Größen nixj ermittelt, die jeweils die Raddrehzahl des entsprechenden Rades 102ixj beschreiben. Die Größen nixj werden Blöcken 203 und 208 zugeführt. Die Raddrehzahlsensoren 201ixj sind unabhängig von der Art des Reglers 208 auf jeden Fall vorhanden.

Ferner enthält das Fahrzeug einen Sensor 202 mit dem eine die Querdynamik des Fahrzeuges beschreibende ermittelt wird. Im vorliegenden Fall handelt es bei der die Querdynamik des Fahrzeuges beschreibenden Größe um eine die Querbeschleunigung des Fahrzeuges beschreibende Größe aqmess. Selbstverständlich kann anstelle einer die Querbeschleunigung beschreibenden Größe auch eine die Gierrate des Fahrzeuges beschreibende Größe verwendet werden. Die mit Hilfe des Sensors 202 erfaßte Größe aqmess wird den Blöcken 203, 204, 205 sowie 208 zugeführt. Die Größe aqmess kann alternativ anstelle mit Hilfe eines Sensors auch aus den Raddrehzahlen nixj hergeleitet werden.

Bei der in Figur 2 dargestellten Sensorik handelt es sich um die, die Verwendung findet, wenn es sich bei dem Regler 208 beispielsweise um einen bekannten Bremsschlupfregler handelt, der aufgrund der in ihm ablaufenden Regelung in die Radbremsen eingreift, und/oder um einen Antriebsschlupfregler handelt, der aufgrund der in ihm ablaufenden Regelung in die Radbremsen und/oder in den Motor eingreift. An dieser Stelle sei nochmals erwähnt, daß der Querbeschleunigungssensor nicht zwingend erforderlich ist. Die Querbeschleunigung aqmess kann auch ausgehend von den Raddrehzahlen nixj ermittelt werden. Selbstverständlich können in Abhängigkeit der Art des in der erfindungsgemäßen Vorrichtung implementierten Reglers 208 weitere Sensoren hinzukommen. Handelt es sich beispielsweise bei dem Regler 208 um einen Regler, der in seiner Grundfunktion eine die Fahrdynamik des Fahrzeuges beschreibende Größe, vorzugsweise eine von der Querbeschleunigung und/oder der Gierrate des Fahrzeuges abhängige Größe, durch Eingriffe in die Radbremsen und/oder in den Motor regelt - solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt -, so sind neben den Raddrehzahlsensoren 201ixj und dem Querbeschleunigungssensor 202, auch ein Gierratensensor und ein Lenkwinkelsensor vorhanden.

Die in Figur 2 gewählte strukturelle Darstellung soll keine Einschränkung darstellen. In Abhängigkeit der Art des implementierten Reglers sind, wie oben angedeutet, eventuell leichte Modifikationen erforderlich.

Im folgenden sei angenommen, daß das Fahrzeug 101 Raddrehzahlsensoren 201ixj und einen Querbeschleunigungssensor 202 aufweist.

In einem Block 203 werden Größen Rvixj ermittelt, die das Radverhalten der Räder des Fahrzeuges quantitativ beschreiben. Hierzu werden dem Block 203 die Raddrehzahlen nixj, die Größe aqmess sowie eine die Fahrzeuggeschwindigkeit beschreibende Größe vf, die im Block 208 in bekannter Weise aus den Raddrehzahlen nixj ermittelt wird, zugeführt. Die das Radverhalten quantitativ beschreibenden Größen Rvixj werden einem Block 204 zugeführt. In diesem Block 204 wird wenigstens in Abhängigkeit der Größen Rvixj eine Größe KT ermittelt, die beschreibt, ob für das Fahrzeug eine Kipptendenz, insbesondere um eine in Längsrichtung des Fahrzeuges orientierte Fahrzeugachse, vorliegt oder nicht.

Im folgenden soll auf die im Block 203 ablaufende Ermittlung der Größen Rvixj und auf die im Block 204 ablaufende Ermittlung der Größe KT in Zusammenschau eingegangen werden, da beide Vorgänge eng zusammenhängen. Zur Ermittlung der Größe KT können zwei unterschiedliche Vorgehensweisen herangezogen werden. Bei einer ersten werden kurzzeitig Bremsmomente und/oder Antriebsmomente erzeugt und/oder verändert, eine zweite kommt ohne diese Erzeugung aus.

Bei der ersten Vorgehensweise wird zunächst in dem Block 204 die Größe aqmess mit einem entsprechenden Schwellenwert verglichen. Ist die Größe aqmess größer als der Schwellenwert, so deutet dies darauf hin, daß sich das Fahrzeug in einem querdynamisch kritischen Fahrzustand befindet. Deshalb werden in diesem Fall im Block 204 Größen SMixj* bzw. SM* erzeugt, die dem Block 208 zugeführt werden. Ausgehend von den Größen SMixj* werden durch den Regler 208 und der zugehörigen Ansteuerlogik 209 an wenigstens einem Rad kurzzeitig Bremsmomente erzeugt und/oder verändert. Ausgehend von den Größen SMixj* und SM* werden durch den Regler 208 und der zugehörigen Ansteuerlogik 209 an wenigstens einem Rad kurzzeitig Antriebsmomente erzeugt und/oder verändert. Da sich das Fahrzeug in einem querdynamisch kritischen Zustand befindet, kann eine Kipptendenz des Fahrzeuges um eine in Längsrichtung des Fahrzeuges orientierte Fahrzeugachse vorliegen. Eine Kipptendenz eines Fahrzeuges ist im Normalfall damit verbunden, daß einzelne Räder des Fahrzeuges abheben bzw. abzuheben drohen. Solche Räder haben eine geringe Bodenhaftung, weswegen eine kurzzeitige Erzeugung und/oder Veränderung des Bremsmomentes und/oder des Antriebsmomentes an diesen Rädern zu deutlich erkennbaren Änderungen der Raddynamik führen. An dieser Stelle sei bemerkt, daß es ausreichend ist, vorstehend beschriebene Eingriffe an den Rädern vorzunehmen, die beispielsweise während einer Kurvenfahrt vom Abheben bedroht sind, d.h. an den kurveninneren Rädern.

Ferner ist es ausreichend geringe Momente zu erzeugen bzw. geringfügige Änderungen der Momente durchzuführen. Aus den vorstehend genannten Gründen kann durch die kurzzeitige Erzeugung und/oder Veränderung eines Bremsmomentes und/oder eines Antriebsmomentes an den Rädern ermittelt werden, ob für das Fahrzeug tatsächlich eine entsprechende Kipptendenz vorliegt oder nicht.

Bei der ersten Vorgehensweise werden im Block 203 für die Räder Größen Rvixj ermittelt, die das Radverhalten der entsprechenden Räder quantitativ beschreiben. Als Größen Rvixj werden solche Größen verwendet, die von der auf das jeweilige Rad wirkenden Radlast abhängen. Beispielsweise handelt es sich hierbei um die Raddrehzahlen nixj selbst oder um eine den Radschlupf beschreibende Größe oder um eine die Radverzögerung oder die Radbeschleunigung beschreibende Größe. Die Größen Rvixj werden dem Block 204 zugeführt.

Alternativ zu den das Radverhalten quantitativ beschreibenden Größen kann bei der ersten Vorgehensweise auch eine Größe ermittelt werden, die anzeigt, ob ein Schlupfregler, in diesem Fall der Regler 208, aufgrund der oben beschrieben Erzeugung und/oder Veränderung von Bremsmomenten und/oder Antriebsmomenten an wenigstens einem Rad einen Eingriff zur Stabilisierung dieses Rades durchführt. Falls ausgehend vom Regler 208 ein solcher Eingriff stattfindet und/oder stattgefunden hat, wird dies dem Block 204 über die Größe SR mitgeteilt. D.h. die Größe SR beschreibt ebenfalls, vergleichbar den Größen Rvixj, das Radverhalten wenigstens eines Rades. Bei dieser Art von Eingriff versucht der Regler Bremsdruck abzubauen, da er bei der vorliegenden Situation vorgetäuscht bekommt, das Rad hätte einen zu großen Bremsschlupf.

Folglich wird während die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einem Rad kurzzeitig erzeugt und/oder verändert wurden, die das Radverhalten des wenigstens einen Rades quantitativ beschreibende Größe und/oder die einen Eingriff des Schlupfreglers anzeigende Größe ermittelt.

Im Block 204 wird während der Zeitdauer, in der die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einen Rad kurzzeitig erzeugt und/oder verändert wurden, die sich ergebende Änderung der das Radverhalten quantitativ beschreibenden Größe ermittelt. Ferner wird, soweit realisiert, im Block 204 ermittelt, ob die den Eingriff des Schlupfreglers anzeigende Größe SR vorhanden ist oder nicht. In Abhängigkeit der Größen Rvixj bzw. SR liegt eine Kipptendenz für das Fahrzeug vor, wenn der Betrag der sich ergebenden Änderung der das Radverhalten quantitativ beschreibenden Größe Rvixj größer als ein entsprechender Schwellenwert ist und/oder wenn die den Eingriff des Schlupfreglers anzeigende Größe SR vorhanden ist. In diesem Fall erzeugt der Block 204 eine Größe KT, die dem Block 205 zugeführt wird. Folglich wird die Größe KT, die ihrem Wesen nach eine Kippgröße ist, da sie beschreibt, ob für das Fahrzeug eine Kipptendenz vorliegt, wenigstens in Abhängigkeit einer das Radverhalten wenigstens eines Rades beschreibenden Größe ermittelt.

Bei der zweiten Vorgehensweise sind keine kurzzeitigen Erzeugungen und/oder Veränderungen von Bremsmomenten und/oder Antriebsmomenten erforderlich. Im Block 203 wird als die das Radverhalten quantitativ beschreibende Größe, eine Größe ermittelt, die den Durchmesser oder den Radius des jeweiligen Rades beschreibt. Insbesondere handelt es sich bei dieser Größe um den dynamischen Rollradius. Diese Größe wird in Abhängigkeit der Raddrehzahl nixj des entsprechenden Rades, der die Fahrzeuggeschwindigkeit beschreibenden Größe vf, der Größe aqmess und einer die Geometrie des Fahrzeuges beschreibenden Größe, insbesondere der halben Spurweite, ermittelt. Auch bei der zweiten Vorgehensweise wird die Größe Rvixj dem Block 204 zugeführt. Eine Kipptendenz liegt beispielsweise dann vor, wenn die Größe Rvixj größer als ein entsprechender Schwellenwert ist. In diesem Fall wird, wie bei der ersten Vorgehensweise auch, vom Block 204 eine Größe KT ausgegeben. Vorzugsweise wird bei der zweiten Vorgehensweise die im Block 204 stattfindende Ermittlung der Größe KT entsprechend der ersten Vorgehensweise durchgeführt, wenn die Größe aqmess größer als ein entsprechender Schwellenwert ist.

An dieser Stelle sei bemerkt, daß die Darstellung allgemein zu verstehen ist, so daß beide vorstehend vorgestellten Vorgehensweisen implementiert sein können. Dies soll bedeuten, daß entweder eine Vorgehensweise in Alleinstellung oder aber auch eine Kombination beider Vorgehensweisen implementiert sein können. Je nach Implementierung können bzgl. der Darstellung in Figur 2 leichte Modifikationen erforderlich sein.

Im Regler 208 werden aus den Raddrehzahlen nixj in bekannter Weise verschiedene Größen ermittelt. Zum einen wird im Regler 208 beispielsweise unter Verwendung der Raddrehzahlen nixj eine Größe µ ermittelt, die die momentanen, d.h. die in der jeweiligen Fahrsituation vorliegenden, Reibverhältnisse beschreibt. Diese Größe µ wird einem Block 206 zugeführt. Ferner werden im Regler 208 in bekannter Weise unter Verwendung der Raddrehzahlen nixj die Radlasten beschreibende Größen Lixj ermittelt, die ebenfalls dem Block 206 zugeführt werden. Außerdem wird im Regler 208 in bekannter Weise unter Verwendung von Schätzverfahren eine die Schwerpunktshöhe des Fahrzeuges beschreibende Größe SP ermittelt, die ebenfalls dem Block 206 zugeführt wird.

Im Block 206 werden verschiedene Größen ermittelt, die im Block 205 benötigt werden. Zum einen wird im Block 206 ein charakteristischer Wert chWaq für die die Querdynamik des Fahrzeuges beschreibende Größe ermittelt. In die Ermittlung dieses charakteristischen Wertes chWaq gehen die Radlasten Lixj bzw. die Massenverteilung des Fahrzeuges, die Schwerpunktshöhe SP sowie die Größe µ ein. Folglich wird der charakteristische Wert chWaq in Abhängigkeit der Beladung des Fahrzeuges, in Abhängigkeit der Schwerpunktshöhe und in Abhängigkeit der Größe µ ermittelt. Alternativ ist auch denkbar, daß es sich bei dem charakteristischen Wert chWaq um einen fest vorgegebenen Wert handelt.

Die Größen epsilon, S1 und S2, die wie aus den noch zu beschreibenden Figuren 3 und 4 hervorgeht, Schwellenwerte darstellen, sind entweder fest vorgegebene Werte, oder sie werden in Abhängigkeit der Größe chWaq ermittelt. Ebenfalls ist auch eine Ermittlung in Abhängigkeit der Fahrzeuggeschwindigkeit vf oder der Querbeschleunigung aqmess denkbar. Die Größen chWaq, epsilon, S1 und S2 werden ausgehend vom Block 206 dem Block 205 zugeführt.

Im Block 205 wird ausgehend von dem ihm zugeführten Größen eine Strategie zur Stabilisierung des Fahrzeuges aus wenigstens zwei unterschiedlichen Strategien ausgewählt. Auf die Vorgehensweise bei der Auswahl der Strategie wird im Zusammenhang mit den Figuren 3 bzw. 4 noch ausführlich eingegangen. Entsprechend der ausgewählten Strategie erzeugt der Block 205 Größen SMixj und SM, die dem Regler 208 zugeführt werden. Mit Hilfe dieser Größen wird dem Regler 208 gemäß der ausgewählten Strategie mitgeteilt, welche Räder wie beeinflußt werden müssen bzw. wie der Motor beeinflußt werden muß, damit das Fahrzeug stabil bleibt bzw. damit das Fahrzeug stabilisiert wird.

Die erfindungswesentlichen Blöcke 203, 204, 205 und 206 sind in Figur 2 zu einem Block 207 zusammengefaßt.

Mit 208 ist der im Steuergerät 104 implementierte Regler bzw. Fahrzeugregler bezeichnet. Bei dem Regler 208 handelt es sich beispielsweise um einen Bremsschlupfregler und/oder um einen Antriebsschlupfregler. Alternativ kann es sich auch um einen Regler handeln, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. An dieser Stelle sei auf die vorstehend erwähnte Veröffentlichung "FDR - die Fahrdynamikregelung von Bosch" verwiesen. Die im Block 208 in ihrer Grundfunktion stattfindende Regelung basiert in bekannter Weise auf den dem Block 208 zugeführten Größen nixj bzw. aqmess, einer Größe mot2, die beispielsweise die Motordrehzahl des Motors 210 beschreibt und die ausgehend von dem Motor 210 dem Block 208 zugeführt wird, sowie Größen ST2, die ausgehend von einem Block 209, welcher die Ansteuerlogik für die im Fahrzeug enthaltenen Aktuatoren darstellt, dem Block 208 zugeführt werden. Aus der Größe aqmess und unter Berücksichtigung der Fahrzeuggeschwindigkeit vf kann die eventuell für die in der Grundform stattfindende Regelung erforderliche Gierrate ermittelt werden

Zusätzlich zu der im Block 208 in der Grundfunktion implementierten Regelung ist in ihm eine Umkippvermeidung implementiert. Im Rahmen der Umkippvermeidung erfüllt der Regler im wesentlichen zwei Aufgaben. Zum einen setzt er gemäß der vorstehend beschriebenen ersten Vorgehensweise die Größen SMixj* bzw. SM* in entsprechende Signal ST1 um, die der Ansteuerlogik 209 zugeführt werden, und ausgehend von denen an den Rädern kurzzeitig Bremsmomente und/oder Antriebsmomente erzeugt und/oder verändert werden. Zum anderen setzt er die Signale SMixj bzw. SM in entsprechende Signale ST1 um, die ebenfalls der Ansteuerlogik 209 zugeführt werden, und ausgehend von denen zur Stabilisierung des Fahrzeuges entsprechende Bremseneingriffe und/oder Motoreingriffe durchgeführt werden. Diese Eingriffe zur Stabilisierung des Fahrzeuges können den Eingriffen der Regelung der Grundfunktion quasi übergeordnet sein.

Der Regler 208 erzeugt Größen ST1, die der Ansteuerlogik 209, mit der die dem Fahrzeug zugeordneten Aktuatoren angesteuert werden, zugeführt werden. Mit den Größen ST1 wird der Ansteuerlogik 209 mitgeteilt, welche Aktuatoren wie angesteuert werden sollen. Bzgl. der Erzeugung der Größen ST1 gemäß der für die Grundfunktion implementierten Regelung wird auf die vorstehend aufgeführte Veröffentlichung "FDR - die Fahrdynamikregelung von Bosch" verwiesen. Für die Eingriffe, die für die Erkennung der Kipptendenz bzw. die für die Umkippvermeidung durchgeführt werden, werden die Größen ST1 entsprechend modifiziert.

Um ein Fahrzeug bei einer vorliegenden Kipptendenz um eine in Längsrichtung des Fahrzeuges orientierte Fahrzeugachse zu stabilisieren bzw. um ein Umkippen des Fahrzeuges um eine in Längsrichtung des Fahrzeuges orientierte Fahrzeugachse zu vermeiden, sind beispielsweise folgende Eingriffe in die Aktuatoren des Fahrzeuges denkbar: Zum einen kann durch Bremsen bzw. durch Zurücknahme des Motormomentes eine Verminderung der Fahrzeuggeschwindigkeit erreicht werden. Zum anderen kann durch radindividuelle Bremseingriffe gezielt dem Umkippen des Fahrzeuges entgegengewirkt werden. Durch einen starken Bremseneingriff an ausgewählten Rädern wird das gesamte Fahrzeug abgebremst. Bei den ausgewählten Rädern handelt es sich im Normalfall um Räder der Kurvenaußenseite, da diese in einem querdynamisch kritischen Fahrzustand eine höhere Radlast aufweisen, und somit an diesen Rädern eine groβe Bremskraft erzeugt werden kann. Solch ein Bremseneingriff hat mehrere positive Effekte. Zum einen wird die Geschwindigkeit des Fahrzeuges stark verringert, wodurch gleichzeitig die auf das Fahrzeug wirkende Querbeschleunigung und somit auch die auf das Fahrzeug wirkende Fliehkraft verringert wird. Zum anderen wird durch die Bremskraft an den kurvenäußeren Rädern die Seitenführungskraft verringert, wodurch das auf das Fahrzeug wirkende Kippmoment ebenfalls verringert wird. Außerdem werden durch das Bremsen die Aufstandskräfte an der oder an den Hinterachsen zu Gunsten der Aufstandskräfte an der oder an den Vorderachsen vermindert. Durch diesen Bremseneingriff wird ein entsprechendes, auf das Fahrzeug wirkendes Giermoment erzeugt, welches den Kurvenradius des Fahrzeuges aufweitet, wodurch das auf das Fahrzeug wirkende Kippmoment weiter verringert wird.

Im Block 209, der Ansteuerlogik, werden die vom Regler 208 erzeugten Größen ST1 in Ansteuersignale für den Motor 210 sowie in Ansteuersignale für die Aktuatoren des Fahrzeuges umgesetzt. Bei den Aktuatoren handelt es sich beispielsweise um Aktuatoren 212ixj, mit denen an den entsprechenden Rädern eine Bremskraft erzeugbar ist. Zur Ansteuerung des Motors 210 erzeugt die Ansteuerlogik ein Signal mot1, mit dem beispielsweise die Drosselklappenstellung des Motors beeinflußbar ist. Zur Ansteuerung der Aktuatoren 212ixj, die insbesondere als Bremsen ausgebildet sind, erzeugt die Ansteuerlogik 209 Signale Aixj, mit denen die von den Aktuatoren 212ixj an den entsprechenden Rädern erzeugten Bremskräfte beeinflußbar sind. Die Ansteuerlogik 209 erzeugt Größen ST2, die dem Regler 208 zugeführt werden, und die eine Information über die Ansteuerung der einzelnen Aktuatoren enthalten.

Sofern das Fahrzeug über einen Retarder 211 verfügt, kann die Ansteuerlogik zusätzlich ein Signal FR erzeugen, mit dem der Retarder angesteuert wird. Ferner ist auch denkbar, daß das Fahrzeug mit Fahrwerksaktuatoren zur Beeinflussung des Fahrwerks des Fahrzeuges ausgestattet ist.

Bei der in Figur 2 zum Einsatz kommenden Bremsanlage kann es sich um eine hydraulische oder pneumatische oder elektrohydraulische oder elektropneumatische Bremsanlage handeln.

Im folgenden soll mit Hilfe von Figur 3 eine erste Ausführungsform des erfindungsgemäßen Verfahrens beschrieben werden, welches größtenteils im Block 205 abläuft. Dadurch daß in Figur 3 lediglich auf ein einteiliges Fahrzeug eingegangen wird, soll keine Einschränkung der erfindungswesentlichen Idee entstehen. Das in Figur 3 dargestellte Ablaufdiagramm ist in entsprechender Weise auch für eine Fahrzeugkombination anwendbar.

Das erfindungsgemäße Verfahren beginnt mit einem Schritt 301, in welchem die Größen aqmess, chWaq, epsilon, S1 und S2 eingelesen werden. Im Anschluß an den Schritt 301 wird ein Schritt 302 ausgeführt. Im Schritt 302 wird eine Differenz deltaaq ermittelt. Hierzu wird von der Größe chWaq der Betrag der Größe aqmess subtrahiert. Die Größe deltaaq stellt den Abstand der die Querdynamik des Fahrzeuges beschreibenden Größe aqmess von dem charakteristischen Wert chwaq dar. Im Anschluß an den Schritt 302 wird ein Schritt 303 ausgeführt.

Im Schritt 303 wird in einer Abfrage bzw. mit Hilfe eines Vergleiches ermittelt, ob die Größe deltaaq kleiner als ein vorgebbarer Schwellenwert epsilon ist oder nicht. Mit anderen Worten: Es wird ermittelt, ob der Abstand zwischen der Größe aqmess und der Größe chWaq kleiner als der vorgebbare Schwellenwert epsilon ist oder nicht. Ist die Größe deltaaq kleiner als der Schwellenwert epsilon, was gleichbedeutend damit ist, daß die die Querdynamik des Fahrzeuges beschreibende Größe aqmess einen kleineren Abstand als epsilon von dem charakteristischen Wert chWaq hat, und sich das Fahrzeug somit nahe eines querdynamisch kritischen Fahrzustandes befindet, so wird anschließend an den Schritt 303 ein Schritt 304 ausgeführt. Beginnend mit dem Schritt 304 wird eine der wenigstens zwei Strategien zur Stabilisierung des Fahrzeuges ausgewählt. Wird dagegen im Schritt 303 festgestellt, daß die Größe deltaaq größer als der Schwellenwert epsilon ist, was gleichbedeutend damit ist, daß die die Querdynamik des Fahrzeuges beschreibende Größe aqmess einen größeren Abstand als epsilon von dem charakteristischen Wert chWaq hat, und sich das Fahrzeug somit weit entfernt von einem querdynamisch kritischen Fahrzustandes befindet, so wird anschließend an den Schritt 303 erneut der Schritt 301 ausgeführt, was gleichbedeutend damit ist, daß in diesem Fahrzustand keine Bremseneingriffe und/oder Motoreingriffe durchgeführt werden. Mit Hilfe des im Schritt 303 stattfindenden Vergleichs wird folglich entschieden, ob eine der wenigstens zwei Strategien zur Stabilisierung des Fahrzeuges ausgewählt wird oder nicht.

Im Schritt 304 wird ermittelt, ob für das Fahrzeug eine Kipptendenz um eine in Längsrichtung des Fahrzeuges orientierte Fahrzeugachse vorliegt. Diese Ermittlung läuft entsprechend den obigen Ausführungen in den Blöcken 203 und 204 ab. Wie in diesem Zusammenhang ausgeführt, wird die Kipptendenz anhand einer das Radverhalten wenigstens eines Rades beschreibenden Größe ermittelt.

An dieser Stelle sei bemerkt, daß die Formulierung "eine in Längsrichtung des Fahrzeuges orientierte Fahrzeugachse" folgendermaßen zu verstehen ist: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Wird im Schritt 304 festgestellt, daß eine Kipptendenz vorliegt, so wird im Anschluß an den Schritt 304 ein Schritt 305 ausgeführt. Durch die Verzweigung von Schritt 304 auf Schritt 305 wird eine erste Strategie zur Stabilisierung des Fahrzeuges ausgewählt. Diese erste Strategie besteht im wesentlichen aus dem Schritt 305.

Im Schritt 305 werden zur Stabilisierung des Fahrzeuges an wenigstens einem Rad Bremseneingriffe durchgeführt. Vornehmlich werden diese an solchen Rädern durchgeführt, die eine große Radlast aufweisen. Die Räder, die eine große Radlast aufweisen, sind aufgrund der Ermittlung der Kipptendenz bekannt. Die Bremseneingriffe werden so durchgeführt, daß diese Räder stark gebremst werden. Alternativ oder unterstützend werden zur Stabilisierung des Fahrzeuges, insbesondere zur Reduzierung der Fahrzeuggeschwindigkeit, Motoreingriffe durchgeführt. Die Bremseneingriffe und/oder die Motoreingriffe werden dabei so durchgeführt, daß sich die Größe aqmess dem charakteristischen Wert chWaq annähert und/oder diese nicht überschreitet. Dabei werden die Bremseneingriffe und/oder die Motoreingriffe wenigstens in Abhängigkeit der Größe deltaaq gebildet. Durch die innerhalb der ersten Strategie durchgeführten Bremseneingriffe werden die Räder des Fahrzeuges individuell angesteuert, so daß beispielsweise lediglich ein Rad gebremst wird. Diese Art von Eingriffen, d.h. starke radindividuelle Bremseneingriffe sind deshalb erforderlich, weil für das Fahrzeug bereits eine Kipptendenz vorliegt, und durch diese radindividuellen Bremseneingriffe zum einen die Fahrzeuggeschwindigkeit reduziert wird und zum anderen ein Giermoment, welches auf das Fahrzeug stabilisierend wirkt, erzeugt wird.

Wird dagegen im Schritt 304 festgestellt, daß keine Kipptendenz vorliegt, so wird im Anschluß an den Schritt 304 ein Schritt 306 ausgeführt. Mit der Verzweigung von Schritt 304 auf Schritt 306 wird eine zweite Strategie ausgewählt. Folglich wird in Abhängigkeit der Tatsache, ob eine Kipptendenz des Fahrzeuges um eine in Längsrichtung des Fahrzeuges orientierte Fahrzeugachse vorliegt, und somit in Abhängigkeit der Größe KT, die dieses beschreibt, eine Strategie zur Stabilisierung des Fahrzeuges aus wenigstens zwei Strategien ausgewählt.

Die zweite Strategie besteht im wesentlichen aus den Schritten 306, 307 sowie 308. Im Schritt 306 wird ein erster Vergleich in Abhängigkeit der Größe deltaaq durchgeführt. Hierzu werden im Schritt 306 zwei Teilabfragen durchgeführt. Zum einen wird in einer ersten Teilabfrage ermittelt, ob die Größe deltaaq negativ ist. Dadurch wird erkannt, ob die Größe aqmess bereits größer als der charakteristische Wert chWaq ist, d.h. ob sich das Fahrzeug bereits in einem querdynamisch kritischen Fahrzustand befindet. In einer zweiten Teilabfrage wird ermittelt, ob die zeitliche Änderung der Größe deltaaq kleiner als ein entsprechender Schwellenwert S1 ist. Bei dem Schwellenwert S1 handelt es sich um einen negativen Wert. Mit dieser Teilabfrage wird erkannt, wie schnell sich die Größe aqmess an den charakteristischen Wert chWaq annähert.

Ist im Schritt 306 weder die erste Teilabfrage noch die zweite Teilabfrage erfüllt, was gleichbedeutend damit ist, daß die Größe aqmess kleiner als der charakteristische Wert chWaq ist und daß sich die Größe aqmess nur langsam an den charakteristischen Wert chWaq annähert, so wird anschließend an den Schritt 306 erneut der Schritt 301 ausgeführt, da in diesem Fahrzustand des Fahrzeuges keine Stabilisierungseingriffe erforderlich sind. Ist dagegen im Schritt 306 entweder die erste Teilabfrage oder die zweite Teilabfrage erfüllt, was gleichbedeutend damit ist, daß entweder die Größe aqmess bereits größer als der charakteristische Wert chWaq ist, oder daß sich die Größe aqmess schnell an den charakteristischen Wert chWaq annähert, so wird im Anschluß an den Schritt 306 ein Schritt 307 ausgeführt.

Im Schritt 307 wird ein zweiter Vergleich durchgeführt, bei dem ermittelt wird, ob die zeitliche Änderung der Größe aqmess kleiner als ein entsprechender Schwellenwert S2 ist.

Wird im Schritt 307 festgestellt, daß die zeitliche Änderung der Größe aqmess kleiner als der Schwellenwert S2 ist, so wird anschließend an den Schritt 307 der Schritt 305 ausgeführt, d.h. es werden die Bremseneingriffe und/oder Motoreingriffe gemäß der ersten Strategie durchgeführt. Bei dem Schwellenwert S2 handelt es sich um einen negativen Wert. Wird dagegen im Schritt 307 festgestellt, daß die zeitliche Änderung der Größe aqmess größer als der Schwellenwert S2 ist, so wird im Anschluß an den Schritt 307 ein Schritt 308 ausgeführt.

Im Schritt 308 werden die Bremseneingriffe und/oder Motoreingriffe der zweiten Strategie durchgeführt. Hierzu werden beispielsweise alle Räder des Fahrzeuges gleichmäßig gebremst. Ergänzend oder alternativ werden Motoreingriffe durchgeführt. Die Bremseneingriffe und/oder die Motoreingriffe werden dabei so durchgeführt, daß die Größe aqmess sich dem charakteristischen Wert chWaq annähert und/oder diesen nicht überschreitet. Dabei werden die Bremseneingriffe und/oder die Motoreingriffe wenigstens in Abhängigkeit der Größe deltaaq gebildet. Durch die Bremseneingriffe und/oder Motoreingriffe der zweiten Strategie wird über eine Reduzierung der Fahrzeuggeschwindigkeit eine Stabilisierung des Fahrzeuges erreicht.

In Abhängigkeit der beiden in den Schritten 306 bzw. 307 stattfindenden Vergleiche wird somit ermittelt, ob keine Bremseneingriffe und/oder Motoreingriffe oder die Bremseneingriffe und/oder Motoreingriffe der ersten Strategie oder ob die Bremseneingriffe und/oder Motoreingriffe der zweiten Strategie durchgeführt werden.

Sowohl im Anschluß an den Schritt 305 als auch im Anschluß an den Schritt 308 wird erneut der Schritt 301 ausgeführt.

Mit Hilfe der Figur 4 soll eine zweite Ausführungsform des größtenteils im Block 205 ablaufenden erfindungsgemäßen Verfahrens beschrieben werden. Dabei ist das in Figur 4 mit Hilfe des Ablaufdiagrammes dargestellte erfindungsgemäße Verfahren sowohl für eine Fahrzeugkombination als auch für ein Einzelfahrzeug anwendbar.

Das erfindungsgemäße Verfahren beginnt mit einem Schritt 401, in welchem die Größen aqmess, chWaq, epsilon und S1 eingelesen werden. Im Anschluß an den Schritt 401 wird ein Schritt 402 ausgeführt, wobei der Schritt 402 dem bereits beschriebenen Schritt 302 entspricht. Im Anschluß an den Schritt 402 wird ein Schritt 403 ausgeführt, der dem bereits beschriebenen Schritt 303 entspricht. Ist die im Schritt 403 stattfindende Abfrage nicht erfüllt, so wird entsprechend der Figur 3 im Anschluß an den Schritt 403 erneut der Schritt 401 ausgeführt. Ist dagegen die im Schritt 403 stattfindende Abfrage erfüllt, so wird anschließend an den Schritt 403 ein Schritt 404 ausgeführt.

Im Schritt 403 wird ermittelt, ob die Größe deltaaq positiv ist. Wird im Schritt 404 festgestellt, daß die Größe deltaaq positiv ist, so wird im Anschluß an den Schritt 404 ein Schritt 405 ausgeführt. Mit der Verzweigung von Schritt 404 auf Schritt 405 wird eine zweite Strategie zur Stabilisierung des Fahrzeuges ausgewählt, die aus den Schritten 405 und 406 besteht.

Im Schritt 405 wird ein Vergleich durchgeführt, bei dem ermittelt wird, ob die zeitliche Änderung der Größe deltaaq kleiner als ein entsprechender Schwellenwert S1 ist. Bei dem Schwellenwert S1 handelt es sich um einen negativen Wert. Die Bedeutung dieser Abfrage entspricht der zweiten Teilabfrage des Schrittes 306. Wird im Schritt 405 festgestellt, daß die zeitliche Änderung der Größe deltaaq größer als der Schwellenwert S1 ist, so wird anschließend an den Schritt 405 ein Schritt 406 ausgeführt, d.h. es werden die Bremseneingriffe und/oder Motoreingriffe gemäß der zweiten Strategie durchgeführt. Wird dagegen im Schritt 405 festgestellt, daß die zeitliche Änderung der Größe deltaaq kleiner als der Schwellenwert S1 ist, so wird im Anschluß an den Schritt 405 ein Schritt 408 ausgeführt, d.h. es werden die Bremseneingriffe und/oder Motoreingriffe gemäß der ersten Strategie durchgeführt.

Im Schritt 406 werden zur Stabilisierung des Fahrzeuges die Bremseneingriffe und/oder Motoreingriffe so durchgeführt, daß die Größe aqmess kleiner oder gleich dem charakteristischen Wert chWaq ist. Beispielsweise werden durch die Bremseneingriffe alle Räder des Fahrzeuges gleichmäßig gebremst. Durch die Motoreingriffe wird das Motormoment entsprechend reduziert. Weitere Ausführungen bzgl. dieser Bremseneingriffe und/oder Motoreingriffe können der Beschreibung der zweiten Strategie in der Figur 3 entnommen werden.

Wird dagegen im Schritt 404 festgestellt, daß die Größe deltaaq negativ ist, so wird im Anschluß an den Schritt 404 ein Schritt 407 ausgeführt. Mit der Verzweigung von Schritt 404 auf Schritt 407 wird eine erste Strategie zur Stabilisierung des Fahrzeuges ausgewählt, die aus den Schritten 407 und 408 besteht.

Folglich wird gemäß des Schrittes 404 in Abhängigkeit der Tatsache, ob die betrachtete Größe deltaaq positiv oder negativ ist, eine Strategie zur Stabilisierung des Fahrzeuges aus wenigstens zwei Strategien ausgewählt.

Im Schritt 407 wird ermittelt, ob für das Fahrzeug eine Kipptendenz um eine in Längsrichtung des Fahrzeuges orientierte Fahrzeugachse vorliegt. Diese Ermittlung läuft entsprechend den obigen Ausführungen in den Blöcken 203 und 204 ab. Der Schritt 407 entspricht dem bereits beschriebenen Schritt 304. Wird im Schritt 407 festgestellt, daß für das Fahrzeug keine Kipptendenz vorliegt, so wird anschließend an den Schritt 407 der Schritt 405 ausgeführt, und somit die zweite Strategie zur Stabilisierung des Fahrzeuges durchgeführt.

Wird dagegen im Schritt 407 festgestellt, daß für das Fahrzeug eine Kipptendenz vorliegt, so wird im Anschluß an den Schritt 407 ein Schritt 408 ausgeführt, in welchem die Bremseneingriffe und/oder Motoreingriffe der ersten Strategie zur Stabilisierung des Fahrzeuges durchgeführt werden. Für diese Bremseneingriffe und Motoreingriffe gilt das bereits zur ersten Strategie der Figur 3 Ausgeführte.

Sowohl im Anschluß an den Schritt 406 als auch im Anschluß an den Schritt 408 wird erneut der Schritt 401 ausgeführt.

## Patentansprüche

1. Verfahren zur Stabilisierung eines Fahrzeuges im Sinne einer Umkippvermeidung, mit dem ein Umkippen des Fahrzeuges um eine in Längsrichtung des Fahrzeuges orientierte Fahrzeugachse vermieden wird,
bei dem Eingriffe zur Stabilisierung des Fahrzeuges im Sinne einer Umkippvermeidung durchgeführt werden,
bei dem eine Abfrage (304, 404) ausgeführt wird, in der ermittelt wird, ob für das Fahrzeug eine Kipptendenz vorliegt, oder in der in Abhängigkeit einer die Querdynamik des Fahrzeuges beschreibenden Größe (aqmess) und eines charakteristischen Wertes (chWaq) für die die Querdynamik des Fahrzeuges beschreibende Größe ein erster Vergleich (404) durchgeführt wird,
**dadurch gekennzeichnet,**
**daß** in Abhängigkeit der Abfrage eine Strategie zur Stabilisierung des Fahrzeuges im Sinne einer Umkippvermeidung aus wenigstens zwei unterschiedlichen Strategien ausgewählt wird, wobei in den Strategien zur Stabilisierung des Fahrzeuges jeweils wenigstens eine Art von Eingriffen zur Stabilisierung des Fahrzeuges durchgeführt wird.

2. Verfahren nach Anspruch 1, **dadurch gekennzeichnet,**
**daß** in Abhängigkeit der die Querdynamik des Fahrzeuges beschreibenden Größe (aqmess) und des charakteristischen Wertes (chWaq) ein zweiter Vergleich (303, 403) durchgeführt wird, wobei in Abhängigkeit dieses zweiten Vergleiches entschieden wird, ob eine der wenigstens zwei Strategien ausgewählt wird.

3. Verfahren nach Anspruch 2, **dadurch gekennzeichnet,**
**daß** zur Durchführung des zweiten Vergleiches (303, 403) eine Differenz (deltaaq) aus dem charakteristischen Wert (chWaq) und dem Betrag der die Querdynamik des Fahrzeuges beschreibenden Größe (aqmess) ermittelt wird, und
**daß** diese Differenz (deltaaq) mit einem vorgebbaren Schwellenwert (epsilon) verglichen wird, wobei keine Strategie zur Stabilisierung des Fahrzeuges ausgewählt wird, wenn diese Differenz größer als der Schwellenwert ist und wobei eine der wenigstens zwei Strategien zur Stabilisierung des Fahrzeuges ausgewählt wird, wenn diese Differenz kleiner als der Schwellenwert ist.

4. Verfahren nach Anspruch 1, **dadurch gekennzeichnet,**
**daß** bei einer ersten Strategie zur Stabilisierung des Fahrzeuges im Sinne einer Umkippvermeidung an wenigstens einen Rad, insbesondere an einem Rad, welches eine große Radlast aufweist, dergestalt Bremseneingriffe durchgeführt werden, daß dieses Rad stark gebremst wird, und/oder Motoreingriffe durchgeführt werden.

5. Verfahren nach Anspruch 1, **dadurch gekennzeichnet,**
**daß** eine zweite Strategie einen ersten Vergleich (306) enthält, der in Abhängigkeit einer Differenz (deltaaq), die aus dem Betrag der die Querdynamik des Fahrzeuges beschreibenden Größe (aqmess) und dem charakteristischen Wert (chWaq) gebildet wird, durchgeführt wird, und/oder einen zweiten Vergleich (307) enthält, der in Abhängigkeit von der die Querdynamik des Fahrzeuges beschreibenden Größe (aqmess) durchgeführt wird,
wobei in Abhängigkeit des ersten Vergleichs (306) ermittelt wird, ob entweder keine Bremseneingriffe und Motoreingriffe oder ob Bremseneingriffe und/oder Motoreingriffe einer ersten Strategie oder einer zweiten Strategie durchgeführt werden, und wobei in Abhängigkeit des zweiten Vergleichs (307) ermittelt wird, ob entweder die Bremseneingriffe und/oder Motoreingriffe der ersten Strategie oder der zweiten Strategie durchgeführt werden.

6. Verfahren nach Anspruch 1, **dadurch gekennzeichnet,**
**daß** bei einer zweiten Strategie zur Stabilisierung des Fahrzeuges im Sinne einer Umkippvermeidung dergestalt Bremseneingriffe durchgeführt werden, daß alle Räder des Fahrzeuges gleichmäßig gebremst werden und/oder Motoreingriffe dergestalt durchgeführt werden, daß das Motormoment reduziert wird.

7. Verfahren nach Anspruch 4 oder 6, **dadurch gekennzeichnet, daß** die Bremseneingriffe und/oder die Motoreingriffe so durchgeführt werden, daß die die Querdynamik des Fahrzeuges beschreibende Größe (aqmess) sich dem charakteristischen Wert (chWaq) annähert und/oder diesen nicht überschreitet,
wobei die Bremseneingriffe und/oder die Motoreingriffe wenigstens von einer Differenz (deltaaq) abhängen, die aus der die Querdynamik des Fahrzeuges beschreibenden Größe (aqmess) und dem charakteristischen Wert (chWaq) gebildet wird.

8. Verfahren nach Anspruch 5, **dadurch gekennzeichnet,**
**daß** zur Durchführung des ersten Vergleichs (306) die Differenz (deltaaq) mit einem entsprechenden Schwellenwert (0) und/oder eine die zeitliche Änderung der Differenz beschreibende Größe (d/dt(deltaaq)) mit einem entsprechenden Schwellenwert (S1) verglichen wird, und/oder
**daß** zur Durchführung des zweiten Vergleichs (307) eine die zeitliche Änderung der die Querdynamik des Fahrzeuges beschreibenden Größe (d/dt(aqmess)) mit einem entsprechenden Schwellenwert (S2) verglichen wird,
wobei keine Bremseneingriffe und Motoreingriffe durchgeführt werden, wenn im ersten Vergleich (306) die Differenz positiv und die die zeitliche Änderung der Differenz beschreibende Größe größer als der entsprechende Schwellenwert ist, und/oder
wobei Bremseneingriffe und/oder Motoreingriffe gemäß der ersten Strategie durchgeführt werden, wenn im ersten Vergleich (306) die Differenz negativ oder die die zeitliche Änderung der Differenz beschreibende Größe kleiner als der entsprechende Schwellenwert ist, und wenn im zweiten Vergleich (307) die die zeitliche Änderung der die Querdynamik beschreibenden Größe kleiner als der entsprechende Schwellenwert ist und/oder
wobei Bremseneingriffe und/oder Motoreingriffe gemäß der zweiten Strategie durchgeführt werden, wenn im ersten Vergleich (306) die Differenz negativ oder die die zeitliche Änderung der Differenz beschreibende Größe kleiner als der entsprechende Schwellenwert ist, und wenn im zweiten Vergleich (307) die die zeitliche Änderung der die Querdynamik beschreibenden Größe größer als der entsprechende Schwellenwert ist.

9. Verfahren nach Anspruch 1, **dadurch gekennzeichnet,**
**daß** der charakteristische Wert wenigstens in Abhängigkeit einer Größe ermittelt wird, die die momentanen, insbesondere die in der jeweiligen Fahrsituation vorliegenden, Reibverhältnisse beschreibt.

10. Verfahren nach Anspruch 1, **dadurch gekennzeichnet,**
**daß** zur Durchführung des ersten Vergleichs (404) aus dem charakteristischen Wert (chWaq) und dem Betrag der die Querdynamik des Fahrzeuges beschreibenden Größe (aqmess) eine Differenz (deltaaq) gebildet wird,
wobei eine erste Strategie ausgewählt wird, wenn die Differenz negativ ist und eine zweite Strategie ausgewählt wird, wenn die Differenz positiv ist.

11. Verfahren nach Anspruch 10, **dadurch gekennzeichnet,**
**daß** innerhalb der zweiten Strategie zur Stabilisierung des Fahrzeuges ein Vergleich (405) in Abhängigkeit einer Größe (d/dt(deltaaq)) durchgeführt wird, die die zeitliche Änderung der Differenz beschreibt, wobei Bremseneingriffe und/oder Motoreingriffe der zweiten Strategie durchgeführt werden, wenn die die zeitliche Änderung beschreibende Größe (d/dt(deltaaq)) größer als ein entsprechender Schwellenwert (S1) ist, und wobei Bremseneingriffe und/oder Motoreingriffe der ersten Strategie durchgeführt werden, wenn die die zeitliche Änderung beschreibende Größe kleiner als der entsprechende Schwellenwert ist.

12. Verfahren nach Anspruch 1, **dadurch gekennzeichnet,**
**daß** wenigstens in Abhängigkeit einer das Radverhalten wenigstens eines Rades beschreibenden Größe (Rvixj, SR) eine Kippgröße (KT) ermittelt wird, die beschreibt, ob für das Fahrzeug eine Kipptendenz vorliegt, und
**daß** in der Abfrage (303) mit Hilfe der Kippgröße festgestellt wird, ob für das Fahrzeug eine Kipptendenz vorliegt.

13. Verfahren nach Anspruch 10, **dadurch gekennzeichnet,**
**daß** wenigstens in Abhängigkeit einer das Radverhalten wenigstens eines Rades beschreibenden Größe (Rvixj, SR) eine Kippgröße (KT) ermittelt wird, die beschreibt, ob für das Fahrzeug eine Kipptendenz vorliegt, und
**daß** innerhalb der ersten Strategie für den Fall, daß eine Kipptendenz vorliegt, die zu der ersten Strategie gehörenden Bremseneingriffe und/oder Motoreingriffe durchgeführt werden, und für den Fall, daß keine Kipptendenz vorliegt, die zweite Strategie zur Stabilisierung des Fahrzeuges durchgeführt wird.

14. Verfahren nach Anspruch 12 oder 13, **dadurch gekennzeichnet,**
**daß** die das Radverhalten wenigstens eines Rades beschreibende Größe (Rvixj, SR) eine quantitative Größe ist, die wenigstens von der auf das jeweilige Rad wirkenden Radlast abhängt, wobei es sich um eine den Radschlupf und/oder eine die Raddrehzahl und/oder eine die Radverzögerung oder die Radbeschleunigung des entsprechenden Rades beschreibende Größe handelt, und/oder
**daß** die das Radverhalten wenigstens eines Rades beschreibende Größe eine Größe ist, die anzeigt, ob ein Schlupfregler, insbesondere ein Bremsschlupfregler, einen Eingriff zur Stabilisierung wenigstens eines Rades durchführt und/oder durchgeführt hat.

15. Verfahren nach Anspruch 14, **dadurch gekennzeichnet,**
**daß** wenigstens in Abhängigkeit der die Querdynamik des Fahrzeuges beschreibenden Größe (aqmess), an wenigstens einem Rad kurzzeitig Bremsmomente und/oder Antriebsmomente erzeugt und/oder verändert werden, und
**daß** während die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einem Rad kurzzeitig erzeugt und/oder verändert wurden, die das Radverhalten des wenigstens einen Rades quantitativ beschreibende Größe (Rvixj) und/oder die einen Eingriff des Schlupfreglers anzeigende Größe (SR) ermittelt wird.

16. Verfahren nach Anspruch 15, **dadurch gekennzeichnet,**
**daß** die sich ergebende Änderung der das Radverhalten quantitativ beschreibenden Größe (Rvixj) ermittelt wird,
wobei eine Kipptendenz des Fahrzeuges vorliegt, wenn der Betrag der sich ergebenden Änderung größer als ein entsprechender Schwellenwert ist oder wenn die den Eingriff des Schlupfreglers anzeigende Größe vorhanden ist.

17. Verfahren nach Anspruch 13, **dadurch gekennzeichnet,**
**daß** als die das Radverhalten des jeweiligen Rades quantitativ beschreibende Größe, eine Größe ermittelt wird, die den Durchmesser oder den Radius des jeweiligen Rades beschreibt,
wobei diese Größe wenigstens in Abhängigkeit einer die Raddrehzahl des entsprechenden Rades beschreibenden Größe, einer die Fahrzeuggeschwindigkeit beschreibenden Größe, einer die Querdynamik des Fahrzeugs beschreibenden Größe und einer die Geometrie des Fahrzeuges beschreibenden Größe ermittelt wird, und wobei eine Kipptendenz des Fahrzeuges vorliegt, wenn die den Durchmesser oder den Radius des jeweiligen Rades beschreibende Größe größer als ein entsprechender Schwellenwert ist.

18. Vorrichtung zur Stabilisierung eines Fahrzeuges im Sinne einer Umkippvermeidung, mit der ein Umkippen des Fahrzeuges um eine in Längsrichtung des Fahrzeuges orientierte Fahrzeugachse vermieden wird,
die Mittel (210, 211, 212i1j) enthält, mit denen Eingriffe zur Stabilisierung des Fahrzeuges im Sinne einer Umkippvermeidung durchgeführt werden,
die Mittel (205) enthält, mit denen eine Abfrage (304, 404) ausgeführt wird, in der ermittelt wird, ob für das Fahrzeug eine Kipptendenz vorliegt, oder in der in Abhängigkeit einer die Querdynamik des Fahrzeuges beschreibenden Größe (aqmess) und eines charakteristischen Wertes (chWaq) für die die Querdynamik des Fahrzeuges beschreibende Größe ein erster Vergleich (404) durchgeführt wird,
**dadurch gekennzeichnet,**
**daß** in Abhängigkeit der Abfrage eine Strategie zur Stabilisierung des Fahrzeuges im Sinne einer Umkippvermeidung aus wenigstens zwei unterschiedlichen Strategien ausgewählt wird, wobei in den Strategien zur Stabilisierung des Fahrzeuges jeweils wenigstens eine Art von Eingriffen zur Stabilisierung des Fahrzeuges durchgeführt wird.

## Claims

1. Method for stabilizing a vehicle in order to prevent it from rolling over, with which method the vehicle is prevented from rolling over about a vehicle axis oriented in the longitudinal direction of the vehicle, with which interventions for stabilizing the vehicle in order to prevent it from rolling over are carried out, in which an interrogation (304, 404) is carried out in which it is determined whether a rolling-over tendency is present in the vehicle or in which a first comparison (404) is carried out as a function of a variable (aqmess) describing the lateral dynamics of the vehicle, and a characteristic value (chWaq) of the variable describing the lateral dynamics of the vehicle, **characterized in that**, as a function of the interrogation, a strategy for stabilizing the vehicle in order to prevent it from rolling over is selected from at least two different strategies, in each case at least one type of intervention for stabilizing the vehicle being carried out in the strategies for stabilizing the vehicle.

2. Method according to Claim 1, **characterized in that** a second comparison (303, 403) is carried out as a function of the variable (aqmess) describing the lateral dynamics of the vehicle and of the characteristic value (chWaq), it being decided as a function of this second comparison whether one of the at least two strategies is selected.

3. Method according to Claim 2, **characterized in that**, in order to carry out the second comparison (303, 403) a difference (deltaaq) is determined between the characteristic value (chWaq) and the absolute value of the variable (aqmess) describing the lateral dynamics of the vehicle, and
**in that** this difference (deltaaq) is compared with a predefinable threshold value (epsilon), no strategy for stabilizing the vehicle being selected if this difference is greater than the threshold value, and one of the at least two strategies for stabilizing the vehicle being selected if this difference is smaller than the threshold value.

4. Method according to Claim 1, **characterized in that**, in a first strategy for stabilizing the vehicle in order to prevent it from rolling over, braking interventions are carried out at at least one wheel, in particular at a wheel which has a large wheel load, to the effect that this wheel is braked severely and/or engine interventions are carried out.

5. Method according to Claim 1, **characterized in that** a second strategy contains a first comparison (306) which is carried out as a function of a difference (deltaaq) which is formed between the absolute value of the variable (aqmess) describing the lateral dynamics of the vehicle and the characteristic value (chWaq), and/or contains a second comparison (307) which is carried out as a function of the variable (aqmess) describing the lateral dynamics of the vehicle, it being determined as a function of the first comparison (306) whether either no braking interventions and engine interventions are carried out or whether braking interventions and/or engine interventions of a first strategy or of a second strategy are carried out, and it being determined as a function of the second comparison (307) whether either the braking interventions and/or engine interventions of the first strategy or of the second strategy are carried out.

6. Method according to Claim 1, **characterized in that**, in a second strategy for stabilizing the vehicle in order to prevent it from rolling over, braking interventions are carried out to the effect that all wheels of the vehicle are braked to the same degree and/or engine interventions are carried out to the effect that the engine torque is reduced.

7. Method according to Claim 4 or 6, **characterized in that** the braking interventions and/or the engine interventions are carried out in such a way that the variable (aqmess) describing the lateral dynamics of the vehicle approaches the characteristic value (chWaq) and/or does not exceed the latter, the braking interventions and/or the engine interventions depending at least on a difference (deltaaq) which is formed between the variable (aqmess) describing the lateral dynamics of the vehicle and the characteristic value (chWaq).

8. Method according to Claim 5, **characterized in that**, in order to carry out the first comparison (306), the difference (deltaaq) is compared with a corresponding threshold value (0) and/or a variable (d/dt(deltaaq)) describing the change in the difference over time is compared with a corresponding threshold value (S1), and/or
**in that**, in order to carry out the second comparison (307), a change over time of the variable (d/dt(aqmess)) describing the lateral dynamics of the vehicle is compared with a corresponding threshold value (S2), no braking interventions and engine interventions being carried out if, in the first comparison (306), the difference is positive and the variable describing the change in the difference over time is greater than the corresponding threshold value, and/or braking interventions and/or engine interventions being carried out in accordance with the first strategy if, in the first comparison (306), the difference is negative or the variable describing the change in the difference over time is smaller than the corresponding threshold value and if, in the second comparison (307), the variable describing the change in the lateral dynamics over time is smaller than the corresponding threshold value, and/or
braking interventions and/or engine interventions being carried out in accordance with the second strategy if, in the first comparison (306), the difference is negative or the variable describing the change in the difference over time is smaller than the corresponding threshold value and if, in the second comparison (307), the variable describing the change in the lateral dynamics over time is greater than the corresponding threshold value.

9. Method according to Claim 1, **characterized in that** the characteristic value is determined at least as a function of a variable which describes the instantaneous friction conditions, in particular the friction conditions present in the respective driving situation.

10. Method according to Claim 1, **characterized in that**, in order to carry out the first comparison (404), a difference (deltaaq) is formed between the characteristic value (chWaq) and the absolute value of the variable (aqmess) describing the lateral dynamics of the vehicle,
a first strategy being selected if the difference is negative and a second strategy being selected if the difference is positive.

11. Method according to Claim 10, **characterized in that**, within the second strategy for stabilizing the vehicle, a comparison (405) is carried out as a function of a variable (d/dt(deltaaq)) which describes the change in the difference over time, braking interventions and/or engine interventions of the second strategy being carried out if the variable (d/dt(deltaaq)) describing the change over time is greater than a corresponding threshold value (S1), and braking interventions and/or engine interventions of the first strategy being carried out if the variable describing the change over time is smaller than the corresponding threshold value.

12. Method according to Claim 1, **characterized in that**, at least as a function of a variable (Rvixj, SR) describing the wheel behaviour of at least one wheel, a rolling-over variable (KT) is determined which describes whether a rolling-over tendency for the vehicle is present, and
**in that** in the interrogation (303) it is determined, using the rolling-over variable, whether a rolling-over tendency for the vehicle is present.

13. Method according to Claim 10, **characterized in that**, at least as a function of a variable (Rvixj, SR) describing the wheel behaviour of at least one wheel, a rolling-over variable (KT) is determined which describes whether a rolling-over tendency for the vehicle is present, and
**in that** the braking interventions and/or engine interventions associated with the first strategy are carried out within the first strategy if a rolling-over tendency is present, and the second strategy for stabilizing the vehicle is carried out if no rolling-over tendency is present.

14. Method according to Claim 12 or 13, **characterized in that** the variable (Rvixj, SR) describing the wheel behaviour of at least one wheel is a quantitative variable which depends at least on the wheel load acting on the respective wheel, the variable being one which describes the wheel slip and/or one which describes the wheel speed and/or one which describes the wheel deceleration or the wheel acceleration of the corresponding wheel, and/or
**in that** the variable describing the wheel behaviour of at least one wheel is a variable which indicates whether a slip controller, in particular a brake slip controller, carries out and/or has carried out an intervention in order to stabilize at least one wheel.

15. Method according to Claim 14, **characterized in that** braking torques and/or drive torques are generated and/or changed briefly at at least one wheel at least as a function of the variable (aqmess) describing the lateral dynamics of the vehicle, and
**in that** while the braking torques and/or the drive torques are briefly generated and/or varied at the at least one wheel and/or after the braking torques and/or the drive torques have been briefly generated and/or changed at the at least one wheel, the variable (Rvixj) which quantitatively describes the wheel behaviour of the at least one wheel and/or the variable (SR) which indicates an intervention of the slip controller are/is determined.

16. Method according to Claim 15, **characterized in that** the resulting change in the variable (Rvixj) which quantitatively describes the wheel behaviour is determined,
a rolling-over tendency of the vehicle being present if the absolute value of the resulting change is greater than a corresponding threshold value or if the variable indicating the intervention of the slip controller is present.

17. Method according to Claim 13, **characterized in that** a variable which describes the diameter or the radius of the respective wheel is determined as the variable which quantitatively describes the wheel behaviour of the respective wheel, this variable being determined at least as a function of a variable describing the wheel speed of the corresponding wheel, a variable describing the velocity of the vehicle, a variable describing the lateral dynamics of the vehicle and a variable describing the geometry of the vehicle, and a rolling-over tendency of the vehicle being present if the variable describing the diameter or the radius of the respective wheel is greater than a corresponding threshold value.

18. Device for stabilizing a vehicle in order to prevent it from rolling over, with which the vehicle is prevented from rolling over about a vehicle axis oriented in the longitudinal direction of the vehicle, which device contains means (210, 211, 212i1j) with which interventions for stabilizing the vehicle in order to prevent it from rolling over are carried out, which device contains means (205) with which an interrogation (304, 404) is carried out in which it is determined whether a rolling-over tendency is present for the vehicle or in which device a first comparison (404) is carried out as a function of a variable (aqmess) describing the lateral dynamics of the vehicle and of a characteristic value (chWaq) of the variable describing the lateral dynamics of the vehicle, **characterized in that**, as a function of the interrogation, a strategy for stabilizing the vehicle in order to prevent it from rolling over is selected from at least two different strategies, in each case at least one type of intervention for stabilizing the vehicle being carried out in the strategies for stabilizing the vehicle.

## Revendications

1. Procédé de stabilisation d'un véhicule pour éviter son basculement, à l'aide duquel on évite le basculement du véhicule autour d'un axe du véhicule orienté dans la direction longitudinale du véhicule, en effectuant des interventions pour stabiliser le véhicule dans le sens évitant son basculement,
selon lequel, on effectue une interrogation (304, 404) pour déterminer si une tendance au basculement existe pour le véhicule, ou pour effectuer. en fonction d'une grandeur (aqmess) décrivant la dynamique transversale du véhicule et d'une valeur caractéristique (chWaq), une première comparaison (404) pour la grandeur décrivant la dynamique transversale du véhicule,
**caractérisé en ce qu'**
en fonction de l'interrogation, on sélectionne une stratégie pour stabiliser le véhicule dans le sens évitant son basculement parmi au moins deux stratégies différentes, et
dans les stratégies de stabilisation du véhicule on effectue chaque fois au moins un type d'intervention pour stabiliser le véhicule.

2. Procédé selon la revendication 1,
**caractérisé en ce qu'**
en fonction de la grandeur (aqmess) décrivant la dynamique transversale du véhicule et de la valeur caractéristique (chWaq), on effectue une seconde comparaison (303, 403) et en fonction de cette seconde comparaison on décide si l'on sélectionne au moins l'une des deux stratégies.

3. Procédé selon la revendication 2,
**caractérisé en ce que**
pour effectuer la seconde comparaison (303, 403) on détermine une différence (deltaaq) de la valeur caractéristique (chWaq) et du module de la grandeur (aqmess) décrivant la dynamique transversale du véhicule, et
on compare cette différence (deltaaq) à un seuil (ε) prédéterminé,
en ne sélectionnant aucune stratégie pour stabiliser si cette différence est supérieure au seuil, et en sélectionnant au moins l'une des deux stratégies pour stabiliser le véhicule si la différence est inférieure au seuil.

4. Procédé selon la revendication 1,
**caractérisé en ce que**
pour une première stratégie de stabilisation du véhicule dans le sens évitant le basculement, on effectue sur au moins une roue notamment la roue présentant la plus grande charge de roue, des interventions de frein de façon à freiner fortement cette roue et/ou à effectuer une intervention sur le moteur.

5. Procédé selon la revendication 1,
**caractérisé en ce qu'**
une seconde stratégie contient une première comparaison (306) qui en fonction d'une différence (deltaaq) formée à partir du module de la grandeur (aqmess) décrivant la dynamique transversale du véhicule et de la valeur caractéristique (chWaq), et/ou contient une seconde comparaison (307) effectuée en fonction de la grandeur (aqmess) décrivant la dynamique transversale du véhicule,
selon laquelle en fonction de la première comparaison (306) on détermine si on n'effectue aucune intervention sur les freins et sur le moteur ou si on effectue des interventions sur les freins et/ou le moteur selon une première stratégie ou selon une seconde stratégie, et
en fonction de la seconde comparaison (307) on détermine si les interventions sur les freins et/ou sur le moteur se feront selon la première ou la seconde stratégie.

6. Procédé selon la revendication 1,
**caractérisé en ce que**
pour la seconde stratégie de stabilisation du véhicule dans le sens évitant son basculement, on effectue des interventions sur les freins pour que toutes les roues du véhicule soient freinées de la même manière et/ou des interventions sur le moteur pour réduire le couple moteur.

7. Procédé selon l'une quelconque des revendications 4 ou 6,
**caractérisé en ce qu'**
on effectue des interventions sur les freins et/ou sur le moteur pour que la grandeur (aqmess) décrivant la dynamique transversale du véhicule se rapproche de la valeur caractéristique (chWaq) et/ou ne dépasse pas celle-ci,
les interventions sur les freins et/ou sur le moteur dépendant d'au moins une différence (deltaaq) formée à partir de la grandeur (aqmess) décrivant la dynamique transversale du véhicule et de la valeur caractéristique (chWaq).

8. Procédé selon la revendication 5,
**caractérisé en ce que**
pour effectuer la première comparaison (306) on compare la différence (deltaaq) à un seuil correspondant (0) et/ou une grandeur (d/dt(deltaaq)) décrivant la variation dans le temps de la différence avec un seuil correspondant (S1) et/ou
pour effectuer 1a seconde comparaison (307) on compare une grandeur (d/dt(aqmess)) de la variation dans le temps de la grandeur de la dynamique transversale du véhicule avec un seuil correspondant (S2),
on n'effectue aucune intervention sur les freins ou sur le moteur si dans la première comparaison (306) la différence est positive et si la grandeur décrivant la variation dans le temps de la différence est supérieure au seuil correspondant et/ou,
on effectue des interventions sur les freins et/ou sur le moteur selon la première stratégie si dans la première comparaison (306) la différence est négative ou si la grandeur décrivant la variation dans le temps de la différence est inférieure à un seuil correspondant et si dans la seconde comparaison (307), la variation dans le temps de la grandeur décrivant la dynamique transversale est inférieure au seuil correspondant et/ou,
on effectue les interventions sur les freins et/ou sur le moteur selon la seconde stratégie si dans la première comparaison (306), la différence est négative ou si la grandeur décrivant la variation dans le temps de la différence est inférieure au seuil correspondant et si dans la seconde comparaison (307), la grandeur décrivant la variation dans le temps de la dynamique transversale est supérieure au seuil correspondant.

9. Procédé selon la revendication 1,
**caractérisé en ce qu'**
on détermine la valeur caractéristique au moins en fonction d'une grandeur décrivant les conditions d'adhérence existantes momentanément notamment dans la situation de conduite respective.

10. Procédé selon la revendication 1,
**caractérisé en ce que**
pour effectuer la première comparaison (404), à partir de la valeur caractéristique (chWaq) et du module de la grandeur (aqmess) décrivant la dynamique du véhicule, on forme une différence (deltaaq),
on sélectionne la première stratégie si la différence est négative et on sélectionne la seconde stratégie si la différence est positive.

11. Procédé selon la revendication 10,
**caractérisé en ce qu'**
à l'intérieur de la seconde stratégie, pour stabiliser le véhicule on fait une comparaison (405) en fonction d'une grandeur (d/dt(deltaaq)), qui décrit la variation dans le temps de la différence,
on effectue des interventions sur les freins et/ou sur le moteur selon la seconde stratégie si la grandeur (d/dt(deltaaq)) décrivant la variation dans le temps est supérieure à un seuil déterminé (S1), et
on effectue des interventions sur les freins et/ou sur le moteur selon la première stratégie si la grandeur décrivant la variation dans le temps est inférieure au seuil correspondant.

12. Procédé selon la revendication 1,
**caractérisé en ce qu'**
au moins en fonction d'une grandeur (Rvixj, SR) décrivant le comportement d'au moins une roue, on détermine une grandeur de basculement (KT) qui décrit si pour le véhicule il y a une tendance au basculement, et
dans l'interrogation (303), à l'aide de la grandeur de basculement on détermine s'il existe une tendance au basculement pour le véhicule.

13. Procédé selon la revendication 12,
**caractérisé en ce qu'**
au moins en fonction d'une grandeur (Rvixj, SR) décrivant au moins le comportement d'une roue, on détermine une grandeur de basculement (KT) qui décrit si pour le véhicule il existe une tendance au basculement, et à l'intérieur de la première stratégie au cas où il y a une tendance au basculement, on effectue les interventions sur les freins et/ou sur le moteur faisant partie de la première stratégie et dans le cas où il n'y a pas de tendance au basculement, on effectue la seconde stratégie pour stabiliser le véhicule.

14. Procédé selon l'une quelconque des revendications 12 ou 13,
**caractérisé en ce que**
la grandeur (Rvixj, SR) qui décrit le comportement d'au moins une roue est une grandeur quantitative qui dépend au moins de la charge de roue agissant sur la roue respective, et il s'agit d'une grandeur décrivant le patinage de la roue et/ou la vitesse de rotation de la roue et/ou la décélération de la roue et/ou l'accélération de la roue correspondante et/ou,
la grandeur décrivant le comportement d'au moins une roue est une grandeur qui indique si un régulateur de patinage notamment un régulateur anti-patinage de frein a effectué une intervention pour stabiliser au moins une roue et/ou effectue cette intervention.

15. Procédé selon la revendication 14,
**caractérisé en ce qu'**
au moins en fonction de la grandeur (aqmess) décrivant la dynamique transversale du véhicule, sur au moins une roue on crée et/ou on modifie brièvement le couple de frein et/ou le couple moteur, et
pendant que les couples de frein et/ou les couples moteur sont créés et/ou modifiés brièvement sur au moins une roue et/ou après avoir créé et/ou modifié brièvement le couple de frein et/ou le couple moteur d'au moins une roue, on détermine la grandeur (Rvixj) décrivant quantitativement le comportement d'au moins une roue et/ou la grandeur (SR) indiquant une intervention du régulateur de patinage.

16. Procédé selon la revendication 15,
**caractérisé en ce qu'**
on détermine la variation résultante de la grandeur (Rvixj) décrivant quantitativement le comportement de la roue et on a une tendance au basculement du véhicule si le module de la variation obtenue est supérieur à un seuil correspondant ou si la grandeur indiquant une intervention du régulateur de patinage existe.

17. Procédé selon la revendication 13,
**caractérisé en ce qu'**
on détermine comme grandeur décrivant quantitativement le comportement de la roue respective, une grandeur qui décrit le diamètre ou le rayon de la roue respective,
cette grandeur se déterminant au moins en fonction d'une grandeur décrivant la vitesse de rotation de la roue correspondante, une grandeur décrivant la vitesse du véhicule, d'une grandeur décrivant la dynamique transversale du véhicule et d'une grandeur décrivant la géométrie du véhicule, et
on est en présence d'une tendance au basculement du véhicule si la grandeur décrivant le diamètre ou le rayon de la roue respective est supérieure à un seuil correspondant.

18. Dispositif pour stabiliser un véhicule dans le sens évitant le basculement, pour éviter le basculement du véhicule autour d'un axe du véhicule orienté dans la direction longitudinale du véhicule,
comportant des moyens (210, 211, 212i1j) qui effectuent des interventions pour stabiliser le véhicule dans le sens évitant son basculement, des moyens (205) à l'aide desquels on effectue une interrogation (304, 404) pour déterminer si le véhicule à tendance à basculer ou si en fonction de la grandeur (aqmess) décrivant la dynamique transversale du véhicule et d'une valeur caractéristique (chWaq) on effectue une première comparaison (404) pour la grandeur décrivant la dynamique transversale du véhicule,
**caractérisé en ce qu'**
en fonction de l'interrogation, on sélectionne une stratégie de stabilisation du véhicule pour éviter le basculement à partir d'au moins deux stratégies différentes, et
dans les stratégies pour stabiliser le véhicule on effectue chaque fois au moins un type d'intervention pour stabiliser le véhicule.
